# EUROPÄISCHE PATENTANMELDUNG

(11) **EP 2 233 316 A2**
(43) Veröffentlichungstag der Anmeldung: **29.09.2010**
(21) Anmeldenummer: 09176537.0
(22) Anmeldetag: 19.11.2009
(51) Int. Cl.: B42D 15/02

(54) **Informationskarte**

(30) Priorität: 27.03.2009 DE 102009017079; 08.05.2009 DE 102009020438
(71) Anmelder: HoneyPear Tree GmbH, 60323 Frankfurt am Main (DE)
(72) Erfinder: Kovarbasic, Konstantin, 65182, Bad Soden (DE)
(74) Vertreter: KEIL & SCHAAFHAUSEN Patentanwälte

(57) **Zusammenfassung**

Es wird eine Informationskarte mit einem Mikroprozessor, einem Speicher, einem Videodisplay (5) und einem Lautsprecher (7) beschrieben, wobei der Mikroprozessor dazu eingerichtet ist, Video- und/oder Audiodaten in dem Speicher zu speichern und auf dem Videodisplay (5) und/oder dem Lautsprecher (7) abzuspielen. Die Informationskarte (1) weist einen Grundkörper (2) mit einem zentralen Abschnitt (3) und mindestens zwei seitlichen Abschnitten (4a, 4b) auf, wobei die seitlichen Abschnitte (4a, 4b) ausgehend von dem zentralen Abschnitt (3) hin zu ihren Seitenflächen (18) verjüngend ausgebildet sind, so dass die Seitenflächen (18) der seitlichen Abschnitte (4a, 4b) eine geringere Höhe aufweisen als der zentrale Abschnitt (3). Der Grundkörper (2) ist ferner lösbar in einen zweiten Körper (11) aufgenommen.

## Beschreibung

Die vorliegende Erfindung betrifft eine Video- bzw. Informationskarte mit einem Mikroprozessor, einem Speicher, einem Videodisplay und einem Lautsprecher, wobei der Mikroprozessor dazu eingerichtet ist, Video- und/oder Audiodaten in dem Speicher zu speichern und auf dem Videodisplay und/oder dem Lautsprecher abzuspielen.

Aus der WO 2008/110349 A1 ist eine derartige Grußkarte für besondere Anlässe wie beispielsweise Geburtstage, Hochzeiten usw. bekannt. Die Grußkarte besteht aus einem Grundkörper, mit einer Front- und einer Rückseite, wobei innerhalb der Rückseite eine Bildwiedergabevorrichtung in Form eines kleinen LCD-Bildschirmes sowie eine Tonwiedergabevorrichtung in Form eines kleinen Lautsprechers angeordnet sind. Beide sind an eine Signalausgabeeinheit angeschlossen, die wiederum mit einer Speichervorrichtung in Verbindung steht, die sowohl die Ton- als auch die Bilddaten speichert. Über eine Schnittstelle lassen sich die Daten auf die Karte laden. Durch Öffnen der Grußkarte wird ein Schalter aktiviert, wodurch über eine Kontrolleinheit die Bildwiedergabe auf dem LCD-Bildschirm sowie die Tonwiedergabe durch den Lautsprecher gestartet werden. Diese Karte ist jedoch wenig stabil. Außerdem besteht der Nachteil, dass die elektronischen Komponenten fest in die Karte eingebaut sind, so dass die Karte nicht mehrfach verwendet werden kann.

Es ist daher Aufgabe der vorliegenden Erfindung, eine Informationskarte zur Verfügung zu stellen, die bei geringem Gewicht und üblicher Größe einen Schutz für die elektronischen Komponenten bietet und stabil und vielfältig wiederverwendbar ist, wobei dem Anwender ein hohes Maß an Flexibilität hinsichtlich der äußeren Gestaltung der Informationskarte geboten werden soll.

Diese Aufgabe wird erfindungsgemäß im Wesentlichen dadurch gelöst, dass die Informationskarte einen Grundkörper mit einem zentralen Abschnitt und mindestens zwei seitlichen Abschnitten aufweist, wobei die seitlichen Abschnitte ausgehend von dem zentralen Abschnitt hin zu ihren Seitenflächen verjüngend ausgebildet sind, so dass die Seitenflächen der seitlichen Abschnitte eine geringere Höhe aufweisen als der zentrale Abschnitt, und dass der Grundkörper lösbar in einen zweiten Körper aufgenommen ist. Der Grundkörper kann vorzugsweise aus einem Kunststoff bestehenden. Eine besonders einfache Möglichkeit zur Herstellung bietet sich, wenn der Kunststoff ein Spritzgussmaterial ist, so dass der Grundkörper spritzgegossen sein kann. Der zweite, den Grundkörper umgebende Körper kann aus Kartenmaterial, insbesondere Karton, bestehen. Durch den sich zum Rand hin verjüngenden Aufbau sind die Seitenflächen der seitlichen Abschnitte gegenüber dem zentralen Abschnitt abgeflacht. Dies führt dazu, dass die Karte an mindestens zwei ihrer Seitenränder eine geringe Bauhöhe aufweist und vergleichsweise zierlich wirkt.

Aufgrund des die Elektronik aufnehmenden Grundkörpers, der auch als Chassis bezeichnet werden kann, und wegen des den Grundkörper umgebenden zweiten Körpers vorzugsweise aus Karton oder Pappe ergeben sich Vorteile insbesondere hinsichtlich der geometrischen Form der eigentlichen Informationskarte, die frei um den Grundkörper gestaltet werden kann. Der Grundkörper bzw. das Chassis wird dazu vorzugsweise in etwa 250 gr./m² starkes Papier (Pappe, Karton) gepackt. Diese den zweiten Körper bildende Verpackung kann je nach Kundenwunsch - unter Berücksichtigung der Maße des Chassis - angepasst und anschließend an dem Grundkörper festgelegt werden. Außerdem können der zweite (äußere) Körper so leicht erneuert werden, das die teuren elektronischen Komponenten enthaltende Chassis aber mehrfach verwendet werden.

Durch das Abflachen der seitlichen Abschnitte wird ein besonders einfacher Aufbau ermöglicht, weil das überdeckende Material des zweiten Körpers nicht über die Höhe des Videodisplays bzw. Bildschirms bzw. der oberen Kante des Grundkörpers hinausgehen muss. Es kann auf diese Weise auch eine Informationskarte realisiert werden, bei der der Bildschirm gegenüber der oberen Fläche der Karte bzw. ihrer Innenseite nicht abgesenkt ist. Dadurch wird auf technisch einfache Weise ein Produkt mit hoher visueller Qualität bereitgestellt. Natürlich kann die den Bildschirm (Videodisplay) enthaltende Seite der Karte durch einen Deckel des zweiten Körpers abdeckt sein.

Zum Einpassen des Grundkörpers in die eigentliche Informationskarte kann ein den zweiten Körper bildendes Kartenmaterial unter dem Grundköper platziert werden, wobei das Kartenmaterial die Ränder des Grundkörpers überragt. Das Kartenmaterial wird einfach um diese Ränder umgelegt und kann dann, bevorzugt im Bereich der seitlichen Abschnitte, verklebt werden, wodurch das Kartenmaterial an dem Grundkörper festgelegt wird. Durch diese Art der Befestigung des Kartenmaterials an dem Grundkörpers, welcher sämtliche elektronischen Bauteile und Anschlüsse der Informationskarte enthält, ist der Grundkörper erfindungsgemäß wiederverwendbar, wozu über eine Schnittstelle neue Informationen auf die Informationskarte aufgespielt werden können. Der Grundkörper kann aufgrund der wenigen Befestigungspunkte einfach auch aus dem insbesondere aus Kartenmaterial gebildeten zweiten Körper entfernt und neu verpackt werden. Da das Chassis gewölbt ist, gibt es der Karte einen schlanken Eindruck. Die Karte ist daher insbesondere für Nutzer interessant, die als besondere Werbemaßnahme oder zur Information von Kunden oder Interessenten eine Videobotschaft an einen größeren Personenkreis versenden möchten.

Dadurch ist die Informationskarte aber nicht nur für Grußanwendungen interessant, sondern kann beispielsweise auch als Informationsmittel bei Messen und dergleichen verwendetet werden, wobei messespezifisch jeweils ein anders designter zweiter Körper den Grundkörper umgeben kann. Hinsichtlich der Gestaltung der Karte bestehen grundsätzlich keine Beschränkungen. So sind beispielsweise auch klassische Kartenformate realisierbar, die einen an einer Seite angelenkten Deckel des zweiten Körpers aufweisen. Auch die Größe der Karte ist frei wählbar, wenn der Grundkörper in das Kartenmaterial aufgenommen wird.

Eine besonders vorteilhafte Ausführungsform der Erfindung sieht vor, dass die Seitenflächen der seitlichen Abschnitte breiter ausgebildet sind als der an den zentralen Abschnitt anschließende Rand der seitlichen Abschnitte. Dadurch lässt sich die Informationskarte an den seitlichen Abschnitten durch den Anwender sehr gut festhalten, wobei gegebenenfalls Bedienelemente auf den seitlichen Abschnitten besonders gut zu erreichen sind, ohne dass die Gefahr besteht, dass die Karte dem Anwender aus den Händen gleitet.

Der ohnehin schon versteifte und stabilisierte, dafür aber immer noch sehr leichte Aufbau der Informationskarte kann zusätzlich dadurch erhöht werden, dass der Grundköper einen rückwärtigen Deckel aufweist, und dass der Deckel und der Grundkörper mittels Schraubverbindungen verbindbar sind, wobei die Schraubverbindungen vorzugsweise im Bereich der seitlichen Abschnitte angeordnet sein können. Dadurch wird eine besondere Steifigkeit in strukturschwächeren Bereichen bewirkt und der gesamte Grundkörper erlangt eine hohe Steifigkeit und Festigkeit bei gleichzeitig effektivem Leichtbau. Um die Montage zu erleichtern, können an den einander zugewandten Rändern des Deckels und des Grundkörpers zusätzlich Rastverbindungen vorgesehen sein, die durch Aufdrücken des Deckels an dem Grundkörper verrasten und ein Abfallen des Deckels verhindern, solange die Verbindung von Deckel und Grundkörper noch nicht durch Schrauben aneinander gesichert sind.

Es hat sich als besonders vorteilhaft herausgestellt, wenn der Lautsprecher in einem der seitlichen Abschnitte angeordnet ist und wenn in dem zentralen Abschnitt das einen erhöhten Platzbedarf ausweisende Videodisplay angeordnet ist. Durch diesen Aufbau können die seitlichen Abschnitte als zusätzliche Resonanzkörper für den Lautsprecher verwendet werden, wodurch eine gute Tonqualität auch bei kleiner und sehr flach gebauter Informationskarte erreicht werden kann. Hinzu kommt, dass auf diese Weise das Videodisplay zentral angeordnet ist, welches die Höhe der Informationskarte bestimmt. Das Videodisplay ist kann ein LCD- oder insbesondere ein besonders flach bauendes OLED-Display sein.

Vorzugsweise besteht der Grundkörper aus einem ca. 1 mm dickem Plastikmaterial und kann besonders günstig in einem Spritzgussverfahren hergestellt werden. Dadurch schützt der Grundkörper der Video- bzw. Informationskarte alle elektronischen Teile inklusive Bildschirm, Kamera mit Linse, Mikrophon, Zentralprozessor, Lautsprecher und Batterie/Akkumulator sowie gegebenenfalls USB-Anschlüsse effektiv vor äußeren Einwirkungen.

Weitere Ausführungsformen der Erfindung sehen eine Schnittstelle vor, um vorproduzierte Audio/Videodaten zu laden. Eine zugehörige Aufnahme-Software kann gleichwohl in einem Mikrocontroller bzw. Mikroprozessor implementiert sein. Die Karte kann in diesem Fall neu bespielt und wieder verwendet werden, was zu höherer Umweltfreundlichkeit beiträgt. Im Falle einer durch einen Akkumulator anstelle einer Batterie gebildeten Stromversorgung kann die Schnittstelle auch zum Laden des Akkumulators verwendet werden. Ebenso können Schnittstellen zu externen Bedienelementen vorgehen sein.

In einer weiteren Ausführungsform ist die Karte dahingehend eingerichtet, es dem Benutzer zu ermöglichen, eine Audio- und/oder Videobotschaft selbst aufzunehmen. Dazu können eine Kamera und ein Mikrophon in der Karte angeordnet und der Mikroprozessor dazu eingerichtet sein, bspw. nach Betätigung eines Aufnahmeknopfes die Botschaft aufzunehmen. Die Daten können durch erneute Aufnahme überschrieben werden. Entsprechend lassen sich die Daten auch durch eine Schnittestelle abrufen und beispielsweise auf einen Computer übertragen. Ferner kann der Mikroprozessor dazu eingerichtet sein, mehrere verschiedene Botschaften abzuspielen, von denen bspw. einige fest vorgegeben sein und andere durch den Benutzer selbst aufgenommen werden können.

Hardwarekomponenten sind vorgesehen, um die Wiedergabe zu starten. Dies kann ein mit dem Mikrocontroller verbundener, d.h. an einen seiner Eingang angeschlossener Schalter, insbesondere ein Wiedergabe-Mikroschalter, sein, der beim Öffnen der Informationskarte ein Signal an dem Eingang des Mikrocontrollers erzeugt. In dem Mikroprozessor ist eine weitere Software zur Wiedergabe der gespeicherten Daten implementiert, die bei dem von dem Schalter erzeugten Signal die Wiedergabe der gespeicherten Daten automatisch startet. Ferner ist ein Digital/Analog-Wandler für Audio- und Videodaten vorgesehen, um einen Audioverstärker und ein Videodisplay anzusteuern. Alle diese Komponenten können in den Mikrocontroller integriert sein. Ebenso kann auch ein als Mikroschalter ausgebildetes Bedienelement vorgesehen sein, um die Aufnahme zu starten. Durch eine vorzugsweise manuelle Betätigung des Mikroschalters wird eine in dem Mikrocontroller implementierte, zugehörige Aufnahme-Software gestartet.

Vorzugsweise wird die Informationskarte durch einen Deckel des zweiten Körpers, der beispielsweise Bestandteil des Kartenmaterials sein kann, verschlossen, wobei das Aufklappen des Deckels der Karte die Audio/Videobotschaft insbesondere durch Schalten des Mikroschalters abruft.

Weitere Ausführungsformen der Erfindungen sehen vor, dass der die Informationskarte durch eine Viehzahl von Deckeln zugeklappt wird und zumindest einer der Deckel zumindest eine im Wesentlichen der Größe des Bildschirms und/oder zumindest eine im Wesentlichen der Größe des Lautsprechers entsprechende Öffnung aufweist. Damit weist der zweite Körper nicht nur einen Deckel sondern mehrere Deckel, ähnlich einem Buch, auf. Die einzelnen Deckel können Seiten sein, wobei der Anwender durch die Öffnung den Bildschirm betrachten kann. Ferner ist der Mikroprozessor dazu eingerichtet, je nachdem, welcher Deckel aufgeklappt ist, also welche Seite sich der Betrachter gerade anschaut, dem aufgeklappten Deckel zugeordnete Audio- und/oder Videoinhalte aus dem Speicher abzuspielen. Durch Weiterblättern würden dem Anwender jeweils andere zu der jeweiligen Seite zugeordnete Audio- und/oder Videoinhalte vermittelt. Das Abspielen der Inhalte kann bspw. durch Magnete in den einzelnen Deckeln ausgelöst werden. Alternativ oder zusätzlich zu Magneten oder ähnlichem kann auch ein durch den Anwender bedienbarer Knopf in den einzelnen Deckeln das Abspielen der Inhalte auslösen.

Das macht die Informationskarte für verschiedenste Anwendungen interessant. Beispielsweise können die einzelnen Seiten bzw. Deckel mit attraktiven Motive um die Öffnung herum beschmückt sein. Eine derartige Anwendung spiegelt den umweltfreundlichen und vor allem wirtschaftlichen Vorteil der Erfindung wider. Bei Messen mit verschiedenen Themengebieten können die Seiten bzw. Deckel mit zum jeweiligen Thema passenden Motiven ausgestaltet werden. Je nachdem, welche Seite aufgeschlagen ist und welches Motiv für den Anwender sichtbar ist, spielt der Mikroprozessor die dazu passenden Audio- und Videoinhalte aus dem Speicher. Das erleichtert auch die Steuerung der Informationskarte in hohem Maße, denn sie ist durch den Anwender intuitiv bedienbar. Für die nächste Messe lässt sich die Karte neu bespielen. Lediglich der bspw. aus Karton bestehende zweite Körper muss ausgetauscht werden.

Selbstverständlich lässt sich auf ähnliche Weise auch ein Kinderbuch gestalten, wobei je nach aufgeschlagener Seite und dem für das Kind sichtbaren Motiv eine dazu passende Geschichte auf dem Bildschirm gezeigt oder über den Lautsprecher erzählt werden kann. Selbstverständlich ist auch beides möglich.

Weitere Merkmale, Vorteile und Anwendungsmöglichkeiten der Erfindung ergeben sich auch aus der nachfolgenden Beschreibung des Ausführungsbeispiels und der Zeichnung. Dabei bilden alle beschreibenden und/oder bildlich dargestellten Merkmale für sich oder in beliebiger Kombination den Gegenstand der vorliegenden Erfindung, unabhängig von ihrer Zusammenfassung in den Ansprüchen oder deren Rückbezügen.

Es zeigen:
- Fig. 1: den Grundkörper gemäß einer ersten Ausführungsform;
- Fig. 2a: eine erste Ausführungsform einer Informationskarte mit dem Grund- körper gemäß Fig. 1 in einer Seitenansicht;
- Fig. 2b: eine zweite Ausführungsform einer Informationskarte mit dem Grund- körper gemäß Fig. 1 in einer Seitenansicht;
- Fig. 3: einen Seitenbereich des zentralen Abschnittes des Grundkörpers gemäß Fig. 1 und
- Fig. 4: den Innenaufbau des Grundkörpers gemäß Fig. 1 aus einer rückwär- tigen Ansicht.

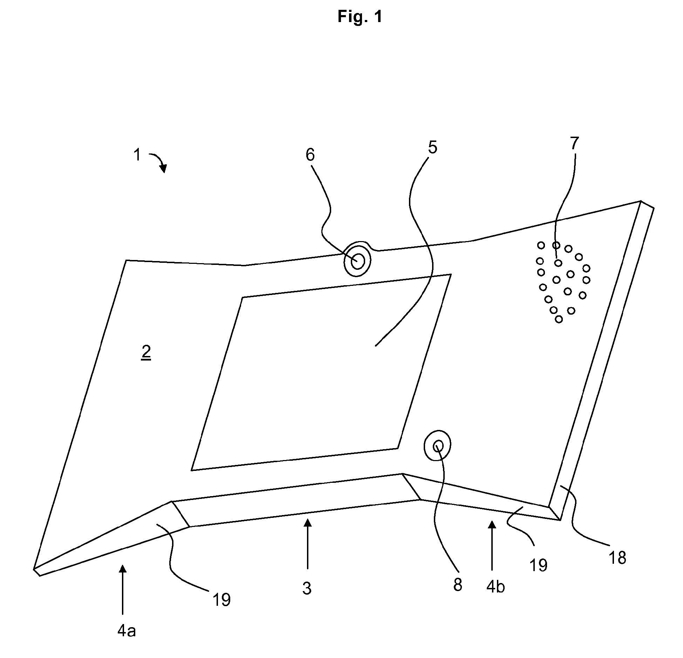

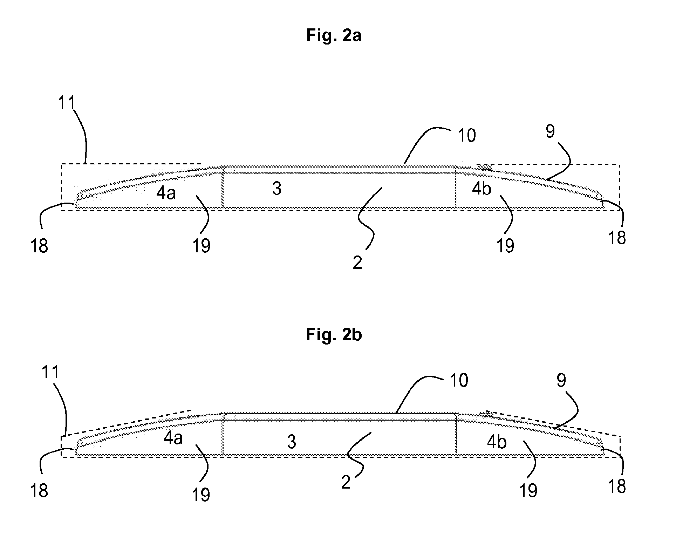

Die in der Fig. 1 dargestellte Informationskarte 1 besitzt einen aus Kunststoff gespritzten Grundkörper 2, der auch als Chassis bezeichnet wird, mit einem zentralen Abschnitt 3, dem Mittelteil des Grundkörpers 1, und zwei seitlichen Abschnitten 4a und 4b, an denen die Informationskarte vom Anwender vorzugsweise gehalten werden kann. In den zentralen Abschnitt 3 ist ein Videodisplay (Bildschirm) 5 integriert. Der Grundkörper 2 wird in einem weiteren Produktionsschritt in starkes Kartenmaterial, Karton oder Pappe, eingepackt, welches einen zweiten Körper 11 und dann zusammen mit dem Grundkörper 2 die äußeren Form der Video- bzw. Informationskarte bildet. Dies ist in den Fig. 2a und 2b dargestellt.

An dem in Fig. 1 oberen Ende des zentralen Abschnittes 3 ist in den Grundkörper 2 eine Minikamera 6 integriert, die bspw. durch einen in den Grundkörper integrierten Aufnahmeknopf aktiviert wird. Wie die Fig. 1 zeigt, sind die seitlichen Abschnitte 4a und 4b gegenüber dem zentralen Abschnitt 3 verbreitert ausgebildet, d.h. sie weisen breitere Seitenflächen 18 auf als der an den zentralen Abschnitt 3 anschließende Rand der seitlichen Abschnitte 4a, 4b. Insbesondere wenn der Grundkörper 2 dicht von schützender und je nach Einsatz bedruckter Pappe als zweiter Körper 11 umgeben ist, trägt diese Form zu einem sicheren Handling der Informationskarte 1 bei, da die verbreiterten seitlichen Abschnitte 4a, 4b einen sicheren Griff seitens des Anwenders zulassen. In einem der seitlichen Abschnitten 4a, 4b ist ferner der Lautsprecher 7 unter entsprechenden Bohrungen in dem Grundkörper 2 angeordnet.

Die seitlichen Abschnitte 4a und 4b sind gegenüber dem Grundkörper 1 verjüngend ausgebildet, d.h. die Seitenflächen 18 sind gegenüber dem zentralen Abschnitt 3, in dem das Display 5 angeordnet ist, abgeflacht. Sie weisen also eine geringere Bauhöhe auf als der zentrale Abschnitt 3. auf Der zentrale Abschnitt 3 und die Seitenflächen 18 sind über näherungsweise keilförmig verlaufende Seiten 19 miteinander verbunden. Dadurch wird das Einfassen des Grundkörpers erleichtert. Auf der oberen Fläche des Grundkörpers 2 ist ferner ein Bedienelement 8 angeordnet, mittels dessen bspw. eine Aufnahme gestartet oder wiedergegeben werden kann.

Den Vorteil des Aufbaus des Grundkörpers verdeutlichen insbesondere die Figuren 2a und 2b, die den Grundkörper 2 der Fig. 1 aus der Seitenansicht zeigen. Deutlich ist die Verjüngung der seitlichen Abschnitte 4a, 4b gegenüber dem zentralen Abschnitt 3 zu erkennen. Die Frontflächen 9 der seitlichen Abschnitte 4a und 4b fallen gegenüber dem zentralen Abschnitt 3 deutlich ab. Mit dem Bezugszeichen 10 ist der Bereich gekennzeichnet, an dem die Bildschirmoberfläche liegt. Sie bildet vorzugsweise ungefähr den oberen Rand des Grundkörpers 2. Schematisch mit Strichlinien ist ferner das den Grundkörper 2 umgebende starke Papier bzw. das Kartenmaterial dargestellt, das den zweiten Körper 11 bildet. Der Grundkörper kann auf einfach Weise in die Informationskarte integriert werden, indem das zunächst plane Kartenmaterial unter dem Grundkörper 2 platziert wird, wobei das Kartenmaterial die Ränder des Grundkörpers 2 überragt. Durch Umlegen und bspw. Verkleben dieser Ränder auf den Frontflächen 9 wird der Grundkörper 2 anschließend in den zweiten Körper 11 integriert und schützend von diesem umschlossen.

Der Effekt dieses Aufbaus ist, dass das Kartenmaterial auf den seitlichen Abschnitten 4a, 4b gegenüber dem zentralen Abschnitt 3 bereits abfällt, so dass Kartenmaterial des zweiten Körpers 11 den oberen Abschnitt des Grundkörpers 2 in einem Bereich umgibt, der tiefer gelegen ist als der obere Rand 10, d.h. eine geringere Bauhöhe aufweist als der zentrale Abschnitt 3. Selbst wenn also dickes und stabiles Kartenmaterial verwendet wird, trägt diese nicht stark auf und erhöht den Grundkörper 2 nicht stark.

Wie die Fig. 2a zeigt, kann die fertige Informationskarte 1 einen eckigen Aufbau besitzen, wobei im Bereich der seitlichen Abschnitte 4a und 4b des Grundkörpers 2 besonders stabiles Material für den zweiten Körper 11 verwendet wird, das bspw. statt aus Kartenmaterial erfindungsgemäß auch aus Plastik bestehen könnte. In einer anderen Ausführungsform kann aber auch, wie in der Figur 2b gezeigt, eine besonders schlanke Informationskarte 1 realisiert werden, deren maximale Höhe lediglich durch den zentralen Abschnitt 3, der die Kamera 6, den Bildschirm 5, die Schnittstelle 12 und sonstige in der Höhe nur schwer zu miniaturisierende Elemente aufnimmt.

Ferner erleichtern die abfallenden seitlichen Abschnitte 4a, 4b auch das Knicken des Kartenmaterials gegenüber rechteckigen Querschnittsformen des Grundkörpers 2.

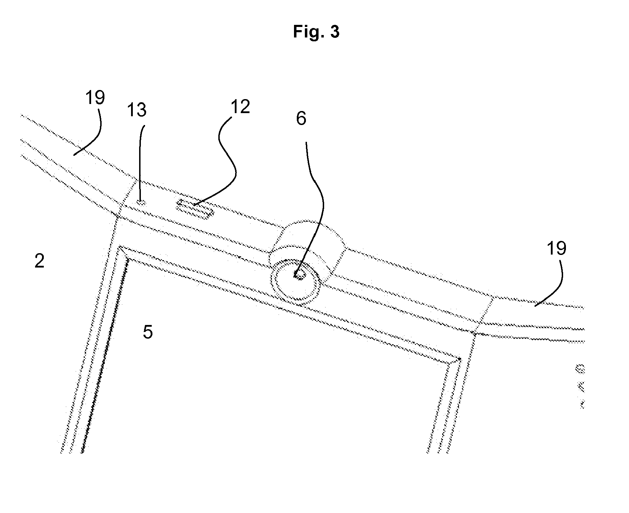

Wie die Fig. 3 zeigt, beherbergt der Grundkörper 2 neben der Kamera 6 in dem zentralen Abschnitt 3 benachbart zu dem Display 5 auch eine Schnittstelle 12, die hier als USB-Anschluss ausgeführt ist. Auch ein Mikrophon 13 ist in den Grundkörper integriert, wobei USB-Anschluss 12 und Mikrophon 13 auch nach dem Einpacken in Papier vorzugsweise frei zugänglich sind. Mittels dieser Elemente ist es möglich, Daten auf die Informationskarte 1 aufzuspielen und die Informationskarte 1 für vielfältige Einsätze wiederholt zu nutzen. Selbstverständlich lassen sich mittels des USB-Anschlusses 12 aufgenommene Daten auch auf einen Computer überspielen.

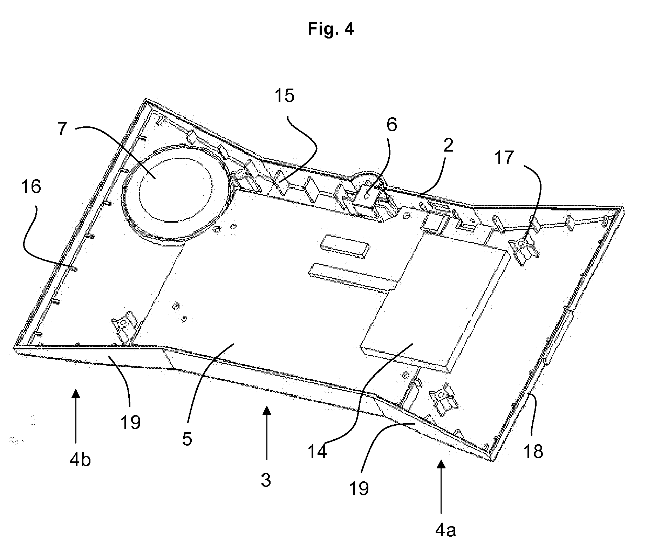

Fig. 4 zeigt den inneren Aufbau des Chassis bzw. Grundkörpers 2 und die Anordnung der einzelnen Elemente. Der Grundkörper 2 ist rückseitig geöffnet dargestellt und kann durch einen nicht dargestellten Deckel verschlossen werden.

In dem zentralen Abschnitt 3 ist der Bildschirm 5 zusammen mit einem nicht näher dargestellten Mikroprozessor angeordnet. Das Chassis 2 beherbergt weiter eine Batterie 14 oder einen Akkumulator, der über den USB-Anschluss 12 aufgeladen werden kann. Der Lautsprecher 7 ist in dem seitlichen Abschnitt 4b angeordnet, wo er aufgrund seiner flachen Bauweise wenig Platz in Anspruch nimmt, gleichzeitig aber vor äußeren Einwirkungen geschützt ist.

Der nicht dargestellte Deckel wird derart auf den Grundkörper 2 so aufgesetzt, dass er den Grundkörper rückseitig verschließt, wobei der Deckel an ersten Stützrippen 15 im zentralen Abschnitt 3 und an zweiten Stützrippen 16 in den seitlichen Abschnitten 4a und 4b abgestützt wird. Befestigt wird der Deckel anschließend in den Bereichen 17 mittels Schraubverbindungen, die den Deckel in diesen Bereich zusätzlich abstützen und die Steifigkeit der seitlichen Abschnitte 4a und 4b erhöhen. Auf diese Weise erlangt der gesamte Grundkörper 2 eine hohe Steifigkeit.

### Bezugszeichenliste

- 1: Informationskarte
- 2: Grundkörper
- 3: zentraler Abschnitt
- 4a, 4b: seitliche Abschnitte
- 5: Display
- 6: Kamera
- 7: Lautsprecher
- 8: Bedienelement
- 9: Frontfläche der seitlichen Abschnitte 4a und 4b
- 10: oberer Rand der Informationskarte
- 11: zweite Körper, Kartenmaterial
- 12: USB-Schnittstelle
- 13: Mikrophon
- 14: Batterie/Akkumulator
- 15: erste Stützrippen
- 16: zweite Stützrippen
- 17: Verschraubungsaufnahme
- 18: Seitenfläche
- 19: Seite

## Patentansprüche

1. Informationskarte mit einem Mikroprozessor, einem Speicher, einem Videodisplay (5) und einem Lautsprecher (7), wobei der Mikroprozessor dazu eingerichtet ist, Video- und/oder Audiodaten in dem Speicher zu speichern und auf dem Videodisplay (5) und/oder dem Lautsprecher (7) abzuspielen, **dadurch gekennzeichnet, dass** die Informationskarte (1) einen Grundkörper (2) mit einem zentralen Abschnitt (3) und mindestens zwei seitlichen Abschnitten (4a, 4b) aufweist, wobei die seitlichen Abschnitte (4a, 4b) ausgehend von dem zentralen Abschnitt (3) hin zu ihren Seitenflächen (18) verjüngend ausgebildet sind, so dass die Seitenflächen (18) der seitlichen Abschnitte (4a, 4b) eine geringere Höhe aufweisen als der zentrale Abschnitt (3), und dass der Grundkörper (2) lösbar in einen zweiten Körper (11) aufgenommen ist.

2. Informationskarte einem der Ansprüche 1, **dadurch gekennzeichnet, dass** die Seitenflächen (18) der seitlichen Abschnitte (4a, 4b) breiter ausgebildet sind als der an den zentralen Abschnitt (3) anschließende Rand der seitlichen Abschnitte (4a, 4b).

3. Informationskarte nach einem der Ansprüche 1 oder 2, **dadurch gekennzeichnet, dass** der Grundkörper (2) einen rückwärtigen Deckel aufweist, welcher mit dem Grundkörper (2) mittels Schraubverbindungen (17) verbindbar ist.

4. Informationskarte nach Anspruch 3, **dadurch gekennzeichnet, dass** die Schraubverbindungen (17) im Bereich der seitlichen Abschnitte (4a, 4b) angeordnet sind.

5. Informationskarte nach einem der vorhergehenden Ansprüche, **dadurch gekennzeichnet, dass** der zweite Körper (11) um den Grundkörper (2) gefaltet ist.

6. Informationskarte nach einem der vorherigen Ansprüche, **dadurch gekennzeichnet, dass** der Lautsprecher (7) in den seitlichen Abschnitten (4a, 4b) und das Videodisplay (5) in dem zentralen Abschnitt (3) angeordnet sind.

7. Informationskarte nach einem der vorherigen Ansprüche, **dadurch gekennzeichnet, dass** die Informationskarte (1) eine Schnittstelle (12) zum Aufspielen bzw. Abrufen der Video- und/oder Audiodaten, zum Anschluss an externe Bedienquellen und/oder zum Aufladen eines integrierten Akkumulators aufweist.

8. Informationskarte nach einem der vorherigen Ansprüche, **dadurch gekennzeichnet, dass** die Informationskarte (1) eine Kamera (6) und/oder ein Mikrophon (13) aufweist.

9. Informationskarte nach einem der vorherigen Ansprüche, **dadurch gekennzeichnet, dass** der Mikroprozessor dazu eingerichtet ist, dass das Abspielen der Audio- und/oder Videoinhalte aus dem Speicher bei einem Aufklappen der Informationskarte erfolgt.

10. Informationskarte nach einem der vorhergehenden Ansprüche, **dadurch gekennzeichnet, dass** die Informationskarte durch eine Viehzahl von Deckeln zugeklappt wird und zumindest einer der Deckel zumindest eine im Wesentlichen der Größe des Bildschirms und/oder zumindest eine im Wesentlichen der Größe des Lautsprechers entsprechende Öffnung aufweist und dass der Mikroprozessor dazu eingerichtet ist, je nachdem, welcher Deckel aufgeklappt ist, dem aufgeklappten Deckel zugeordnete Audio- und/oder Videoinhalte aus dem Speicher abzuspielen.
